# EUROPÄISCHE PATENTSCHRIFT

(11) **EP 2 795 243 B1**
(45) Veröffentlichungstag und Bekanntmachung des Hinweises auf die Patenterteilung: **20.04.2016**
(21) Anmeldenummer: 11802098.1
(22) Anmeldetag: 21.12.2011
(51) Int. Cl.: G01B 11/00

(54) **KOORDINATENMESSGERÄT MIT VERBESSERTER SCHNITTSTELLENANORDNUNG**
CO-ORDINATE MEASURING DEVICE HAVING AN IMPROVED INTERFACE ARRANGEMENT
APPAREIL DE MESURE DE COORDONNÉES AVEC UN ENSEMBLE D'INTERFACES AMÉLIORÉ

(43) Veröffentlichungstag der Anmeldung: 29.10.2014
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Witte, Weller & Partner Patentanwälte mbB
(86) Internationale Anmeldenummer: PCT/EP2011/073701
(87) Internationale Veröffentlichungsnummer: WO 2013/091698

(56) Entgegenhaltungen:
- EP-A1- 2 161 536
- EP-A2- 0 362 625
- WO-A1-00/60310
- WO-A2-2008/098716
- US-A- 5 210 399

## Beschreibung

Die vorliegende Erfindung betrifft eine Systemkomponente für ein Koordinatenmessgerät zum Ermitteln von dreidimensionalen Koordinaten eines zu vermessenden Objekts bzw. Werkstücks, wobei die Systemkomponente eine erste Wechselfläche aufweist, die dazu ausgebildet ist, mit einer zweiten Wechselfläche einer zweiten Systemkomponente eine Schnittstellenanordnung zu bilden, über die die Systemkomponente und die zweite Systemkomponente miteinander gekoppelt sind, wobei die erste Wechselfläche einen Zentralbereich und einen den Zentralbereich umgebenden Außenbereich aufweist.

Gemäß einem weiteren Aspekt betrifft die vorliegende Erfindung ein Koordinatenmessgerät zum Ermitteln von dreidimensionalen Koordinaten eines zu vermessenden Objekts, mit einer voranstehend genannten ersten Systemkomponente und einer zweiten Systemkomponente, wobei die erste Systemkomponente eine erste Wechselfläche aufweist und die zweite Systemkomponente eine zweite Wechselfläche aufweist, wobei die erste Wechselfläche und die zweite Wechselfläche eine Schnittstellenanordnung bilden, über die die erste Systemkomponente und die zweite Systemkomponente miteinander gekoppelt sind, wobei die Schnittstellenanordnung einen Zentralbereich und einen den Zentralbereich umgebenden Außenbereich aufweist.

Eine solche Systemkomponente und ein solches Koordinatenmessgerät sind beispielsweise aus der Druckschrift EP 2 194 357 A1 bekannt.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie beispielsweise von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen. Auf diese Weise lassen sich einfach sämtliche Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Derartige Sensorsysteme bzw. Sensorköpfe, die sowohl taktile als auch optische Sensoren tragen, finden in der Koordinatenmesstechnik zunehmend Bedeutung. Eine Kombination taktiler und optischer Sensoren ermöglicht es, in einem einzigen Koordinatenmessgerät die Vorteile der hohen Genauigkeit eines taktilen Messsystems mit der Geschwindigkeit eines optischen Messsystems zu kombinieren. Des Weiteren werden Kalibriervorgänge bei Sensorwechseln vermieden, ebenso wie ein eventuelles Umspannen eines Werkstücks.

Klassischerweise ist der Sensorkopf, der auch als Sensorsystem bezeichnet werden kann, mit einem Trägersystem verbunden, welches das Sensorsystem stützt und bewegt. Im Stand der Technik sind verschiedene Trägersysteme bekannt, beispielsweise Portalsysteme, Ständer-, Horizontalarm- und Armsysteme, alle Arten von Robotersystemen und letztlich geschlossene CT-Systeme bei mit Röntgenstrahlen arbeitenden Sensorsystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Unter einer "Systemkomponente" wird im Rahmen der vorliegenden Anmeldung jedes solche Element des Trägersystems und der Sensorkopf an sich verstanden. Somit bildet der Sensorkopf für sich genommen eine Systemkomponente. Des Weiteren bildet beispielsweise ein Adapter für sich genommen eine Systemkomponente, ein Dreh-Schwenk-Gelenk eine Systemkomponente, ein Portal eines Portalaufbaus eine Systemkomponente, ein Wechselmagazin eine Systemkomponente usw. Die vorliegende Erfindung betrifft somit sämtliche Schnittstellenanordnungen zweier beliebiger solcher Systemkomponenten.

In Koordinatenmessgeräten mit taktilen Sensorsystemen ist zum Koppeln zweier Systemkomponenten üblicherweise an jeder der Systemkomponenten ein sogenannter "Wechselteller" bzw. eine Wechselfläche vorgesehen. Die Wechselflächen sind derart ausgestaltet, dass sie aneinander angebracht werden können und einen Austausch von Daten in zwei Richtungen, z.B. Messdaten und/oder Steuersignalen, ermöglichen. Üblicherweise sind diese Wechselflächen nach einem bestimmten Muster bzw. Standard aufgebaut, um verschiedene Systemkomponenten beliebig miteinander koppeln zu können, beispielsweise verschiedene Sensorköpfe an ein Dreh-Schwenk-Gelenk usw. Daneben kommt es dabei auch darauf an, dass die Wechselflächen höchst genau reproduzierbar relativ zueinander angeordnet werden. Andernfalls würde der Kalibrieraufwand nach dem Wechseln einer Systemkomponente enorm steigen. In der Regel wird hierzu ein sogenanntes Dreipunktlager verwendet, das drei jeweils zueinander um 120° versetzte Lager über die Wechselfläche verteilt vorsieht. Jedes dieser Lager begrenzt eine laterale Bewegung der Wechselflächen der beiden miteinander zu koppelnden Systemkomponenten zueinander, so dass eine eindeutige Orientierung und Anordnung der beiden Systemkomponenten relativ zueinander möglich wird. Das Dreipunktlager ist in der Regel mit einem äußeren, insbesondere ringförmigen, Außenbereich der Wechselflächen versehen. Der Außenbereich umgibt einen Zentralbereich. In diesem Zentralbereich ist in der Regel eine elektromagnetische Halteeinrichtung vorgesehen. Dabei weist eine Systemkomponente, insbesondere die trägersystemseitige Systemkomponente, einen Elektromagneten auf, und die andere Systemkomponente, in der Regel die sensorkopfseitige Systemkomponente, weist eine Ankerscheibe bzw. Schlussführungsteile auf. Auf diese Weise lassen sich die beiden Systemkomponenten mittels des Elektromagneten fest in das Dreipunktlager aneinanderpressen. Selbstverständlich ist auch eine Kopplung mittels zweier Permanentmagneten möglich.

Des Weiteren zeigen die Druckschriften DE 10 2004 014 153 A1, EP 0 362 625 A2, DE 200 08 721 U1 und WO 2008/098716 A1 Vorrichtungen zum Koppeln verschiedener Objektivanordnungen auf einen optischen Sensorkopf.

Des Weiteren zeigen die Druckschriften EP 2 161 536 A1, WO 00/60310 A1 und US 5 210 399 A Koordinatenmessgeräte mit Sensorköpfen mit optischen Sensoren.

Bisher mangelt es im Stand der Technik jedoch an Schnittstellenanordnungen, die ein flexibles Anordnen von sowohl taktil als auch optisch messenden Sensorköpfen in Koordinatenmessgeräten bei effektiver Energieübertragung und hohen Datenübertragungsraten ermöglichen.

Eine objektive technische Aufgabe der vorliegenden Erfindung besteht darin, eine Schnittstellenanordnung einer Systemkomponente eines Koordinatenmessgeräts bzw. ein Koordinatenmessgerät zu verbessern.

Gemäß einem ersten Aspekt der Erfindung wird daher vorgeschlagen, die eingangs genannte Systemkomponente dahingehend zu verbessern, dass der Zentralbereich eine optische Schnittstelleneinrichtung aufweist, wobei der Außenbereich Lagerelemente eines Dreipunktlagers zur eindeutigen Positionierung der Systemkomponente und der zweiten Systemkomponente relativ zueinander aufweist, und wobei der Außenbereich mindestens ein Halteelement einer Halteeinrichtung zum Aneinanderhalten der ersten Systemkomponente und der zweiten Systemkomponente aufweist, und wobei der Außenbereich mindestens eine elektrische Schnittstelleneinrichtung oder eine elektromagnetische Schnittstelleneinrichtung aufweist.

Des Weiteren wird gemäß einem weiteren Aspekt vorgeschlagen, das eingangs genannte Koordinatenmessgerät dahingehend weiterzubilden, dass über den Zentralbereich eine optische Schnittstelle zwischen der ersten Systemkomponente und der zweiten Systemkomponente gebildet ist, wobei der Außenbereich ein Dreipunktlager zur eindeutigen Positionierung der ersten Systemkomponente und der zweiten Systemkomponente relativ zueinander aufweist, wobei der Außenbereich mindestens eine Halteeinrichtung zum Aneinanderhalten der ersten Systemkomponente und der zweiten Systemkomponente aufweist, und wobei der Außenbereich mindestens eine elektrische Schnittstelle oder eine elektromagnetische Schnittstelle aufweist.

Erfindungsgemäß wird somit vorgeschlagen, dass in den Wechselflächen der Systemkomponenten ein freier Zentralbereich vorgesehen ist, der eine optische Abbildung durch die Wechselflächen der ersten und der zweiten Systemkomponente hindurch bzw. durch die Schnittstellenanordnung hindurch ermöglicht. Des Weiteren wird in dem Außenbereich ein Dreipunktlager und mindestens eine elektrische Schnittstelle bzw. Schnittstelleneinrichtung bereitgestellt, so dass nach wie vor die Übertragung von elektrischer Energie und/oder Signalen auf elektrischem Wege über die Schnittstellenanordnung hinweg möglich ist. Auf diese Weise wird es möglich, eine Kommunikation über die Schnittstellenanordnung hinweg durch sowohl elektrische als auch optische Übertragungswege bereitzustellen.

Insbesondere kann dabei der Außenbereich ringförmig ausgebildet sein. Damit ergibt sich für den Zentralbereich eine kreisförmige Ausbildung. Eine kreisförmige Ausgestaltung des Zentralbereichs ermöglicht eine rotationssymmetrische freie Übertragungsstrecke über die Schnittstellenanordnung hinweg. Dies begünstigt sowohl die optische Signalübertragung sowohl mittels Freistrahlen als auch mittels Lichtwellenleitern.

Die bisher zentral angeordnete Halteeinrichtung, beispielsweise in Form eines Elektromagneten in einer Systemkomponente und einer Ankerscheibe in der anderen Systemkomponente, ist nunmehr in dem Außenbereich angeordnet. Somit kann vorgesehen sein, dass drei Halteelemente jeweils um 120° zueinander versetzt in dem Außenbereich angeordnet sind. Insbesondere können diese Halteelemente gleichartig ausgebildet sein. Beispielsweise kann vorgesehen sein, dass in der einen Systemkomponente nunmehr drei jeweils zueinander um 120° versetzte Elektromagneten vorgesehen sind und in der anderen Systemkomponente korrespondierend drei jeweils zueinander um 120° versetzte Ankerplatten oder Flussführungselemente. Selbstverständlich kann auch vorgesehen sein, dass in dem Außenbereich an der Systemkomponente drei Permanentmagnete, insbesondere jeweils zueinander um 120° versetzt, angeordnet sind.

Die gestellte Aufgabe wird somit vollkommen gelöst.

Gemäß einer Ausführungsform der Systemkomponente gemäß dem ersten Aspekt der Erfindung kann vorgesehen sein, dass das Halteelement ein Halteelement einer magnetischen oder elektromagnetischen Halteeinrichtung ist.

Auf diese Weise kann besonders wirksam eine Halteeinrichtung bereitgestellt werden, die die nötige Anpresskraft zwischen der Systemkomponente und der zweiten Systemkomponente bereitgestellt. Bei dem Halteelement kann es sich beispielsweise um eine Spule mit Kern handeln. Das Halteelement kann aber auch durch eine damit korrespondierende Ankerscheibe oder entsprechende Flussführungselemente gebildet sein. Selbstverständlich kann die Halteeinrichtung auch mittels zweier Permanentmagneten bereitgestellt sein, so dass das Halteelement auch ein Permanentmagnet sein kann.

Erfindungsgemäß ist vorgesehen, dass des Weiteren in dem Außenbereich mindestens eine weitere optische Schnittstelleneinrichtung zwischen der Systemkomponente und der zweiten Systemkomponente ausgebildet ist.

Auf diese Weise ist man dazu in der Lage, neben der optischen Schnittstelle in dem freien Zentralbereich auch in dem Außenbereich eine optische Übertragungsstrecke zum Übertragen von Licht zu bilden. Insbesondere können diese Übertragungsstrecken in dem Außenbereich zum Übertragen von Daten verwendet werden. Insbesondere bei der Verwendung von optischen Sensoren, aber auch bei der Nutzung taktiler Sensoren im sogenannten "Scanning-Verfahren", werden große Datenmengen erzeugt, die große Übertragungsbandbreiten erfordern, wie sie insbesondere optische Übertragungswege bereitstellen können. Des Weiteren ist man so dazu in der Lage mittels einer optischen Datenübertragung die empfindlichen und störungsanfälligen Messsignale potentialfrei zu übertragen. Eine elektrische Störanfälligkeit der Messsignale in einem komplexen System wie einem Koordinatenmessgerät kann so gemindert bzw. weitgehend ausgeschlossen werden.

In einer weiteren Ausgestaltung der Systemkomponente gemäß dem ersten Aspekt der Erfindung kann vorgesehen sein, dass die mindestens eine elektrische Schnittstelleneinrichtung in dem Außenbereich dazu ausgebildet ist, eine entsprechende Gegeneinrichtung der zweiten Systemkomponente zu kontaktieren.

Auf diese Weise wird es möglich, beispielsweise mittels einer Stecker-Buchse-Verbindung oder federvorgespannten Kontaktstiften eine elektrische Schnittstelle bereitzustellen. Auch eine Anordnung mittels eines Schleifrings, insbesondere im Falle von Drehverbindungen zwischen der ersten und der zweiten Systemkomponente, sind möglich. Auf diese Weise können besonders sichere elektrische Schnittstellen bereitgestellt werden, die sich insbesondere auch zur Übertragung elektrischer Energie eignen. Selbstverständlich ist darüber hinaus auch die Übertragung von elektrischen Signalen möglich.

In einer weiteren Ausführung der Systemkomponente gemäß dem ersten Aspekt der Erfindung kann vorgesehen sein, dass die mindestens eine elektrische Schnittstelleneinrichtung in dem Außenbereich dazu ausgebildet ist, elektrische Energie und/oder ein elektrisches Signal in Kommunikation mit einer Gegeneinrichtung der zweiten Systemkomponente kontaktlos zu übermitteln oder zu empfangen.

Auf diese Weise ist es möglich, eine elektrische Schnittstelleneinrichtung bereitzustellen, die ohne die Notwendigkeit eines über die Dreipunktlagerung hinausgehenden mechanischen Kontakts zwischen der Systemkomponente und der zweiten Systemkomponente arbeiten kann. Beispielsweise kann ein auf dem Prinzip der Gegeninduktion arbeitendes System eingerichtet sein. Aufgrund der relativ geringen Spaltmaße zwischen der ersten und der zweiten Systemkomponente ist der Einsatz eines solchen Systems möglich.

Die Begrifflichkeit "Kommunikation mit einer Gegenrichtung" steht dabei nicht zwingend für die Übertragung von Daten mittels elektrischer Signale. Wie beschrieben ist, kann auch elektrische Energie zwischen der Systemkomponente und der zweiten Systemkomponente über die kontaktlose elektrische Schnittstelleneinrichtung übertragen werden. Auch die Übertragung elektrischer Energie funktioniert demgemäß in Kommunikation mit einer Gegeneinrichtung der zweiten Systemkomponente, in diesem Fall wären sowohl in der Systemkomponente als auch in der zweiten Systemkomponente beispielsweise Spulenelemente vorzusehen, um die elektrische Energie zu übertragen.

Erfindungsgemäß ist vorgesehen, dass die mindestens eine weitere optische Schnittstelleneinrichtung in dem Außenbereich für eine optische Datenübertragung ausgebildet ist.

Während die optische Schnittstelleneinrichtung in dem Zentralbereich beispielsweise vorteilhaft dazu vorgesehen sein kann, Licht zu übertragen, dem keine besondere Dateninformation innewohnt, beispielsweise für eine zusätzliche Beleuchtung des zu vermessenden Objekts vorgesehenes Licht, ist die weitere optische Schnittstelleneinrichtung in dem Außenbereich für eine Datenübertragung ausgebildet. Wie im weiteren Verlauf noch beschrieben werden wird, besteht bei der weiteren optischen Schnittstelleneinrichtung insbesondere der Vorteil, dass die Datenübertragung kontaktlos über den Spalt zwischen der ersten Wechselfläche der Systemkomponente und der zweiten Wechselfläche der zweiten Systemkomponente erfolgen kann. Zusammen mit einer kontaktlosen elektrischen Schnittstelle kann somit eine bis auf die Dreipunktlagerung berührungsfreie Schnittstellenanordnung bereitgestellt werden. Probleme bei der relativen Positionierung der Systemkomponente zu der zweiten Systemkomponente können somit weitgehend vermieden werden. Des Weiteren hat diese Variante den Vorteil, dass die optische Übertragung von Datensignalen und eine kontaktlose Übertragung von elektrischer Energie basierend auf dem Induktionsprinzip eine weitgehende galvanische Entkopplung der Signale bereitstellt.

Auch bei dem Koordinatenmessgerät gemäß dem zweiten Aspekt der Erfindung ist erfindungsgemäß vorgesehen, dass des Weiteren in dem Außenbereich mindestens eine weitere optische Schnittstelle zwischen der ersten Systemkomponente und der zweiten Systemkomponente ausgebildet ist.

Auf diese Weise ergeben sich ebenfalls die voranstehend beschriebenen Vorteile. Nämlich wird auf diese Weise möglich, neben der optischen Schnittstelle in dem Zentralbereich auch in dem Außenbereich auf optischem Wege beispielsweise Daten zwischen der ersten Systemkomponente und der zweiten Systemkomponente zu übertragen.

Dabei kann insbesondere vorgesehen sein, dass die optische Schnittstelle in dem Zentralbereich und/oder die mindestens eine weitere optische Schnittstelle in dem Außenbereich sowohl in der ersten Wechselfläche als auch in der zweiten Wechselfläche als Freistrahloptik zur Übertragung eines kollimierten Freistrahls ausgebildet ist.

Auf diese Weise ist eine besonders einfache Übertragung ohne weitere optische Koppelglieder oder Lichtwellenleiter möglich.

In einer weiteren Ausgestaltung kann darüber hinaus vorgesehen sein, dass die optische Schnittstelle in dem Zentralbereich und/oder die mindestens eine weitere optische Schnittstelle in dem Außenbereich in entweder der ersten Wechselfläche oder der zweiten Wechselfläche als Freistrahloptik zur Übertragung eines kollimierten Freistrahls ausgebildet ist und in der jeweils anderen Wechselfläche einen Lichtwellenleiter zur optischen Übertragung aufweist.

Auf diese Weise wird es ermöglicht, einen beispielsweise von Sensorseite einkommenden kollimierten oder unkollimierten Freistrahl in einen Lichtwellenleiter zu bündeln. Das in dem Lichtwellenleiter geführte Licht kann dann beispielsweise entlang komplizierter, d.h. bspw. eng und/oder häufig gekrümmter, Wegstrecken geführt werden, für die ansonsten aufwändige optische Aufbauten notwendig wären.

In einer weiteren Ausführungsform des Koordinatenmessgeräts gemäß dem zweiten Aspekt der Erfindung kann vorgesehen sein, dass die optische Schnittstelle in dem Zentralbereich und/oder die mindestens eine weitere optische Schnittstelle in dem Außenbereich sowohl in der ersten Wechselfläche als auch in der zweiten Wechselfläche einen Lichtwellenleiter zur optischen Übertragung aufweist.

Auf diese Weise kann eine Möglichkeit bereitgestellt werden, Signale über die optische Schnittstelle hinweg zu übertragen. Es können so große Datenmengen übertragen werden.

In einer weiteren Ausgestaltung kann dabei vorgesehen sein, dass in der ersten und/oder der zweiten Wechselfläche ein optisches Koppelglied angeordnet ist.

Bei einem derartigen optischen Koppelelement kann es sich beispielsweise um ein Linsenelement, ein diffraktives optisches Element oder auch um eine sogenannte "graded index lens", das heißt ein optisches Element aus einem Material, das eine sich über den Querschnitt senkrecht zu seiner optischen Achse ändernde Brechzahl aufweist, handeln.

Auf diese Weise können Streuverluste über einen Spalt zwischen der ersten Wechselfläche und der zweiten Wechselfläche reduziert bzw. vermieden werden.

In einer weiteren Ausgestaltung des Koordinatenmessgeräts gemäß dem zweiten Aspekt der Erfindung kann vorgesehen sein, dass die mindestens eine elektrische Schnittstelle in dem Außenbereich als Stecker-Buchse-Verbindung ausgebildet ist.

Eine Stecker-Buchse-Verbindung stellt eine sehr sichere elektrische Schnittstelle bereit. Dabei kann vorgesehen sein, dass der Stecker und/oder die Buchse schwimmend gelagert sind, um eine Kontaktfindung bei einem Verbinden der ersten Systemkomponente mit der zweiten Systemkomponente zu vereinfachen. Insbesondere kann eine Stecker-Buchse-Verbindung aufgrund der sicheren Verbindung dazu vorgesehen sein, elektrische Energie zu übertragen.

Des Weiteren kann bei dem Koordinatenmessgerät gemäß dem zweiten Aspekt der Erfindung vorgesehen sein, dass die mindestens eine elektrische Schnittstelle in dem Außenbereich mittels eines federvorgespannten Kontaktstifts und einer Kontaktfläche bereitgestellt ist.

Auf diese Weise kann ebenfalls eine sichere Kontaktverbindung als elektrische Schnittstelle bereitgestellt werden. Darüber hinaus kann eine leichtere Kontaktfindung zwischen den federvorgespannten Kontaktstiften der Kontaktfläche bereitgestellt werden, da die Anforderungen an eine Positionsgenauigkeit gegenüber einer Stecker-Buchse-Verbindung verringert sind.

In einer weiteren Ausgestaltung des Koordinatenmessgeräts gemäß dem zweiten Aspekt der Erfindung kann vorgesehen sein, dass die mindestens eine elektrische Schnittstelle in dem Außenbereich mittels des Dreipunktlagers bereitgestellt ist.

Grundsätzlich ist somit möglich, dass ein Lager oder mehrere Lager des Dreipunktlagers eine elektrische Schnittstelle bereitstellen. Zusätzlich müssen sich die erste Wechselfläche und die zweite Wechselfläche mit den Lagern des Dreipunktlagers ohnehin berühren. Üblicherweise sind derartige Lager von Dreipunktlagern mittels Paaren von Kugeln oder Walzen gebildet, die aufeinander aufliegen oder aber in einer Bohrung oder einer Nut zu liegen kommen. Die dadurch entstehenden Kontaktflächen können eventuell ausreichend sein, die mindestens eine elektrische Schnittstelle geeignet bereitzustellen.

In einer weiteren Ausgestaltung des Koordinatenmessgeräts gemäß dem zweiten Aspekt der Erfindung kann vorgesehen sein, dass die mindestens eine elektrische Schnittstelle in dem Außenbereich als elektromagnetische Schnittstelle dafür ausgebildet ist, kontaktlos elektrische Energie zwischen der ersten Systemkomponente und der zweiten Systemkomponente zu übertragen, wobei die mindestens eine weitere optische Schnittstelle erfindungsgemäß für eine optische Datenübertragung zwischen der ersten Systemkomponente und der zweiten Systemkomponente ausgebildet ist. Auf diese Weise kann kontaktlos zwischen der ersten Systemkomponente und der zweiten Systemkomponente sowohl elektrische Energie übertragen werden als auch in beiden Richtungen ein Datenstrom übertragen werden. Des Weiteren hat diese Variante den Vorteil, dass die Signale galvanisch entkoppelt sind.

Des Weiteren kann in allen Ausführungsformen vorgesehen sein, dass das Koordinatenmessgerät einen Analog-zu-Digital-Umsetzer aufweist. Dieser dient dazu, analoge Signale des Sensors bzw. der Sensoren jeweils in ein digitales Messdatensignal zu transformieren. Das digitale Messdatensignal wird dann über die optische Schnittstelleneinrichtung oder die mindestens eine weitere optische Schnittstelleneinrichtung übertragen. Alternativ oder kumulativ kann darüber hinaus vorgesehen sein, dass über die optische Schnittstelleneinrichtung oder die mindestens eine weitere optische Schnittstelleneinrichtung Messdaten in analoger Form übertragen werden. In kumulativer Anwendung kann beispielsweise vorgesehen sein, dass in Form einer spektralen Lichtversteilung optische analoge Daten bzw. Messdaten und mit einer oder mehreren Lichtwellenlängen bzw. Frequenzen digitale Daten bzw. Messdaten übertragen werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Koordinatenmessgeräts,
- Fig. 2a: eine schematische Ausführungsform eines Koordinatenmessgeräts mit seinen Systemkomponenten und Schnittstellenanordnungen und einem Sensorkopf mit einem taktilen Sensor;
- Fig. 2b: eine schematische Darstellung des Koordinatenmessgeräts in Fig. 2a mit einem optischen Sensorkopf,
- Fig. 3: eine schematische Darstellung einer Ausführungsform einer Systemkomponente, die über ihre Schnittstelleneinrichtungen mit einer zweiten Systemkomponente gekoppelt ist,
- Fig. 4: eine schematische Darstellung entlang einer Schnittlinie IV-IV in Fig. 3,
- Fig. 5a bis 5e: Ausführungsformen einer optischen Schnittstelleneinrichtung bzw. einer optischen Schnittstelle,
- Fig. 6a bis 6c: mögliche Anordnungen eines Lichtwellenleiters,
- Fig. 7a bis 7d: mögliche Ausführungsformen einer elektrischen Schnittstelleneinrichtung bzw. einer elektrischen Schnittstelle.

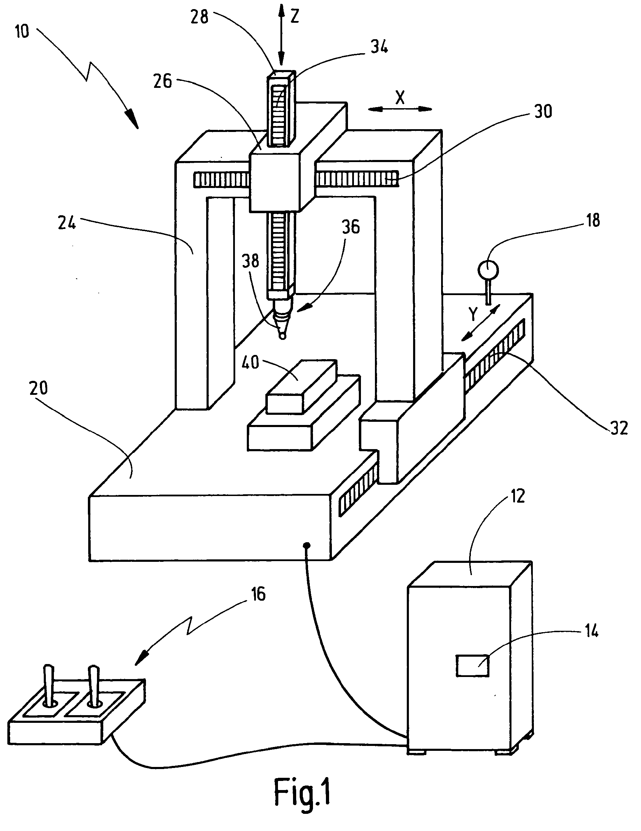

Fig. 1 zeigt ein Koordinatenmessgerät 10. Das Koordinatenmessgerät 10 weist eine Steuerungseinheit 12 zum Steuern des Koordinatenmessgeräts 10 auf. Die Steuerungseinheit 12 weist eine Recheneinheit 14, beispielsweise einen Computer, auf.

Die Steuerungseinheit 12 ist lediglich schematisch als Block dargestellt, grundsätzlich kann die Steuerungseinheit 12 alle zur Steuerung des Koordinatenmessgeräts 10 notwendigen Elemente, beispielsweise Tastaturen, Monitore oder eine Bedienkonsole 16, aufweisen. Des Weiteren umfasst die Steuerungseinheit 12 auch Ausgabemittel, um die durch das Koordinatenmessgerät 10 gewonnenen Daten in geeigneter Form, beispielsweise elektronisch oder in Papierform, auszugeben. Obwohl das Koordinatenmessgerät 10 mittels der Bedienkonsole 16 auch manuell bedient werden kann, ist die Steuerungseinheit 12 auch dazu in der Lage, Mess- und Kalibriervorgänge automatisiert durchzuführen.

Des Weiteren kann das Koordinatenmessgerät 10 eine Einmesskugel 18 aufweisen. Die Einmesskugel 18 ist auf einer Grundplatte 20 des Koordinatenmessgeräts 12 angeordnet. Die Einmesskugel 18 dient zum Kalibrieren des Koordinatenmessgeräts 10, ein solches Kalibrationsverfahren ist beispielsweise in der Druckschrift EP 1 051 596 B1 beschrieben. Dieses dient zum Bestimmen von Korrekturparametern des Koordinatenmessgeräts 10, beispielsweise von einer Nachgiebigkeitsmatrix.

An der Grundplatte 20 ist in der dargestellten Ausführungsform ein Portal 24 vorgesehen, das an der Grundplatte 22 entlang einer ersten Achse (Y) verschiebbar ist. An dem Portal 24 wiederum ist ein Schlitten 26 vorgesehen, der entlang dem Portal 24 in einer zweiten Richtung (X) verschiebbar ist. An dem Schlitten 26 ist eine Pinole 28 vorgesehen, die entlang dem Schlitten 26 in eine dritte Richtung (Z) verschiebbar ist. Die drei Richtungen (X, Y, Z) stehen jeweils senkrecht aufeinander und bilden die Achsen eines absoluten Koordinatensystems (X, Y, Z).

An dem Portal 24 ist eine Skala 30 in X-Richtung, an der Grundplatte 22 eine Skala 32 in Y-Richtung und an der Pinole 28 eine Skala 34 in Z-Richtung vorgesehen. Die Skalen 30, 32, 34 dienen dazu, die Position eines an der Pinole 28 angebrachten Sensors 36 auszulesen. Dazu können die Skalen 30, 32, 34 derart ausgebildet sein, dass ein manuelles Ablesen einer jeweiligen Koordinate möglich ist, insbesondere sind die Skalen 30, 32, 34 jedoch derart ausgebildet, dass eine jeweilige Koordinate durch eine entsprechende Erfassungseinrichtung (nicht dargestellt) erfasst und elektronisch an die Steuerungseinheit 14 übermittelt wird. Die Skalen 30, 32, 34 dienen somit als Lagesensoren zur Erfassung der Lage des Sensors 36.

Die in Fig. 1 dargestellte Ausführungsform mit einem Portal 24 ist lediglich beispielhaft zu verstehen. Grundsätzlich kann die vorliegende Erfindung auch mit allen anderen Arten von Aufbauten des Trägersystems verwendet werden, beispielsweise neben Portalaufbauten wie in den PRISMO-, CONTURA-, ACCURA und UMC-Baureihen der Anmelderin auch Ständeraufbauten, Armaufbauten und Horizontalarmaufbauten wie in den PRO- und CARMET-Baureihen der Anmelderin, Tischaufbauten wie in den Surfcom- und Rondcom-Baureihen der Anmelderin und auch Einzelplatzaufbauten wie in den F25- und O-INSPECT-Baureihen der Anmelderin oder auch CT-Aufbauten wie in der Metrotom-Baureihe der Anmelderin. Darüber hinaus ist allgemein ein Einsatz zusammen mit Roboter-gestützten Trägersystemen denkbar.

Der an der Pinole 28 angebrachte Sensor 36 weist in der dargestellten Ausführungsform einen Taster bzw. eine Tastspitze 38 auf, die auslenkbar gelagert ist und zur Antastung eines zu vermessenden Objekts 40 dient. Grundsätzlich kann es sich bei dem Sensor 36 jedoch auch um einen optischen Sensor handeln. Letztlich kann es sich bei dem Sensor 36 auch um einen Sensor handeln, der ein kombiniertes taktiles und optisches Messen ermöglicht.

Das zu vermessende Objekt 40 ist auf der Grundplatte 22 angeordnet und kann so durch Verfahren des Portals 24, des Schlittens 26 und der Pinole 28 angetastet und vermessen werden.

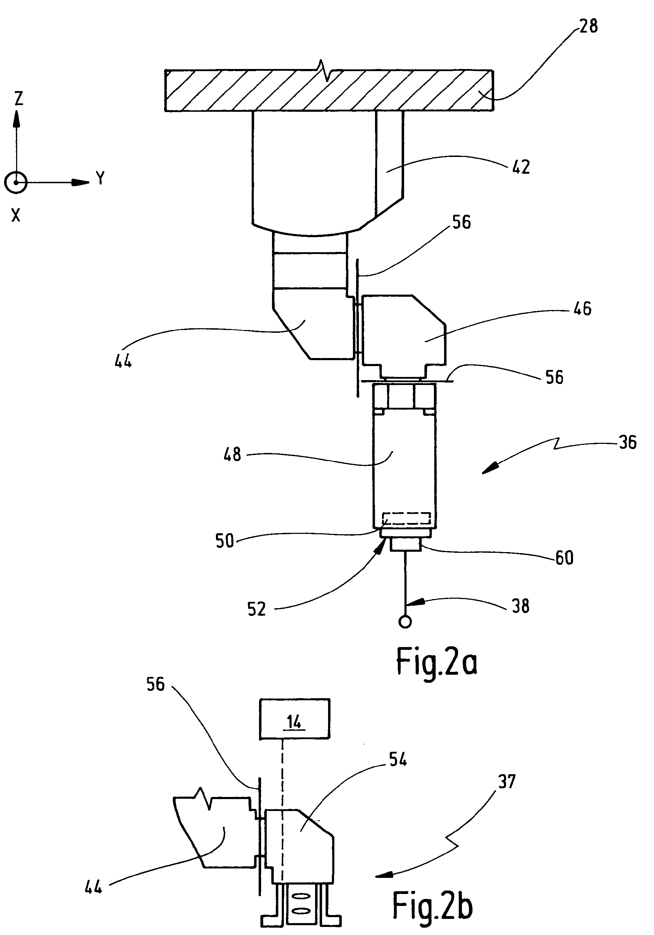

Fig. 2a zeigt eine schematische Ansicht verschiedener Systemkomponenten des Koordinatenmessgeräts 10. Bei einer Systemkomponente kann es sich beispielsweise um ein Element des Trägersystems, wie in der dargestellten Ausführungsform etwa die Pinole 28, oder um eine weitere Befestigungsvorrichtung 42 handeln. Des Weiteren kann eine Systemkomponente von einem Dreh-Schwenk-Gelenk (DSG) 44 oder einem Adapter 46 gebildet werden. Letztlich bildet auch ein Sensorkopf 48 eine Systemkomponente.

An der Pinole 28 ist in der Regel zunächst eine Befestigungsvorrichtung 42 vorgesehen, an der ein Dreh-Schwenk-Gelenk (DSG) 44 vorgesehen ist. Das DSG 44 dient dazu, den Sensor 36 in eine beliebige Richtung auszurichten, um den Taststift 38 geeignet an dem zu vermessenden Objekt 40 positionieren zu können. An dem DSG 44 ist ein Adapter 46 vorgesehen, der dazu dient, einen Übergang von dem DSG 44 zu einem Sensorkopf 48 bereitzustellen, um zu ermöglichen, verschiedene Sensoren 36 bzw. Sensorköpfe 48 mit demselben DSG 44 verwenden zu können.

In dem Sensorkopf 48 ist eine Tasteraufnahme 50 vorgesehen, die einen Taststiftteller 52 hält. An dem Taststiftteller 52 ist dann der eigentliche Taster 38 angeordnet. Der Taststiftteller 52 ist in der Tasteraufnahme 50 gekoppelt durch entsprechende Messaufnehmer (nicht dargestellt) angeordnet, die eine Auslenkung des Tasters 38 bzw. des Taststifttellers 52 erfassen und an die Steuerungseinheit 14 des Koordinatenmessgeräts 12 übermitteln.

Fig. 2b zeigt eine mögliche Anordnung für den Fall, dass ein optischer Sensor 37 verwendet wird. Von der Pinole 28 bis zu dem DSG 44 gleicht der Aufbau dem in Fig. 2a beschriebenen. An die DSG 44 schließt sich dann allerdings direkt der optische Sensor 37 an, der beispielsweise durch ein Kameramodul 54 gebildet ist.

Entsprechend kann auch zwischen dem Kameramodul 54 und dem Drehschwenkgelenk 44 eine Schnittstellenanordnung 56 gebildet sein. Hierbei bilden dann das Kameramodul 54 eine Systemkomponente und das Drehschwenkgelenk 44 eine Systemkomponente.

In den Fig. 2a und 2b ist der Aufbau eines Koordinatenmessgeräts 10 schematisch dargestellt. Wie ersichtlich ist, können sowohl Elemente eines Trägersystems, wie beispielsweise die Pinole 28, die Befestigungsvorrichtung 42, das Dreh-Schwenk-Gelenk 44 eine Systemkomponente bilden, ebenso wie der Adapter 46 und ein Sensorkopf 48 bzw. 54.

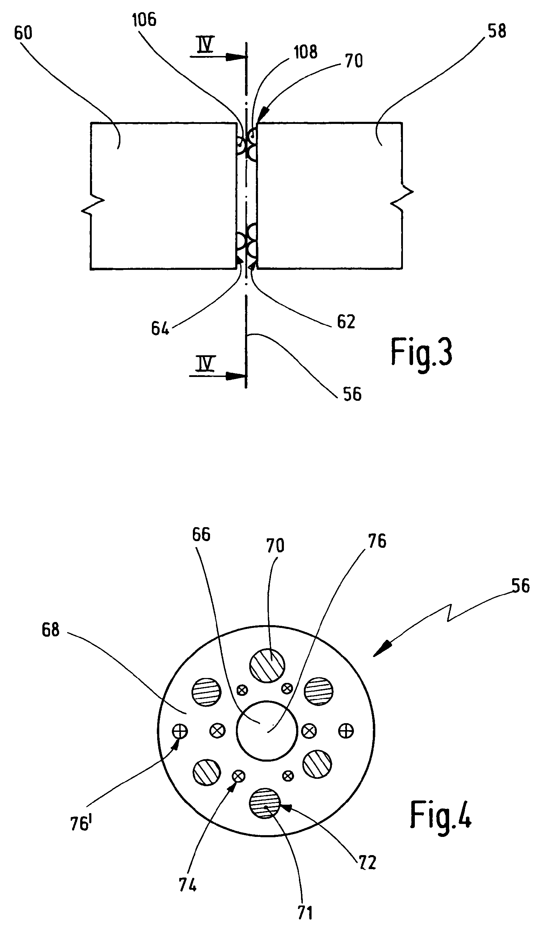

In Fig. 3 ist schematisch eine Anordnung einer ersten Systemkomponente 58 und einer zweiten Systemkomponente 60 dargestellt. Die erste Systemkomponente 58 und die zweite Systemkomponente 60 sind an einer Schnittstellenanordnung 56 miteinander verbunden. Hierzu weist die erste Systemkomponente 58 eine erste Wechselfläche 62 und die zweite Systemkomponente 60 eine zweite Wechselfläche 64 auf. Unter einer "Wechselfläche" wird dabei diejenige Fläche einer Systemkomponente 58, 60 verstanden, die mit einer jeweils anderen Systemkomponente 58, 60 verbunden wird.

In Fig. 4 ist ein Querschnitt entlang einer Linie IV-IV in Fig. 3 dargestellt. Die Fig. 4 gibt somit schematisch die Anordnung einzelner Schnittstellen in der Schnittstellenanordnung 56 wieder.

Die Schnittstellenanordnung 56 weist einen Zentralbereich 66 und einen den Zentralbereich 66 umgebenden Außenbereich 68 auf. Der Zentralbereich 66 kann dabei frei ausgebildet sein. Unter "frei" wird dabei verstanden, dass eine jeweilige Wechselfläche 62, 64 in dem Zentralbereich eine Öffnung aufweist, durch die Licht hindurchtreten kann.

Grundsätzlich kann in dem Zentralbereich auch eine Blende angeordnet sein. Beispielsweise kann diese Blende als Irisblende ausgeführt sein, um den freien Zentralbereich 66 bei Bedarf verschließen zu können. Selbstverständlich kann darüber hinaus die Blende auch dazu verwendet werden, den Durchmesser eines durch den Zentralbereich 66 tretenden Strahlenbündels zu beschränken, wie dies allgemein aus der Optik bekannt ist. Entsprechend kann der Zentralbereich 66 einen Halter (nicht dargestellt) für eine derartige Blende aufweisen. Auch in einen derartigen Halter können beispielsweise Schnittstellen für Lichtwellenleiter, also optische Schnittstellen, oder eine elektrische Schnittstelle integriert sein.

In der dargestellten Ausführungsform ist der Zentralbereich 66 kreisförmig ausgebildet. Der Außenbereich 68 weist eine Ringform auf und umgibt den Zentralbereich 66. Darüber hinaus sind selbstverständlich auch andere Formen des Zentralbereichs 66 und des Außenbereichs 68 denkbar. Insbesondere kann aber beispielsweise auch vorgesehen sein, dass der Zentralbereich 66 kreisförmig ausgebildet ist, wobei der Außenbereich 68 aber außen eine rechteckige Kontur aufweist.

Im Außenbereich 68 sind darüber hinaus Halteelemente 71 eines Dreipunktlagers 70 angeordnet. Die drei Halteelemente 71 sind jeweils in einem Winkel von 120° zueinander über den Hof eines Außenbereichs 68 beabstandet. Bei der Halteeinrichtung 72 kann es sich beispielsweise um eine elektromagnetische Halteeinrichtung handeln. Beispielsweise kann vorgesehen sein, dass in der ersten Systemkomponente 58 als Halteelemente 71 elektromagnetische Spulen angeordnet sind und in der zweiten Systemkomponente 60 entsprechend Flussführungselemente bzw. Ankerplatten vorgesehen sind. Durch Betätigen elektromagnetischer Spulen in der ersten Systemkomponente 58 können somit die Ankerplatten der zweiten Systemkomponente 60 angezogen werden und die Systemkomponenten 58, 60 in dem Dreipunktlager 70 ineinander gedrückt werden.

Darüber hinaus ist in dem Außenbereich 68 mindestens eine elektrische Schnittstelle bzw. Schnittstelleneinrichtung 74 angeordnet. In dem dargestellten Ausführungsbeispiel sind fünf elektrische Schnittstellen 74 rotationssymmetrisch in dem Außenbereich angeordnet. Selbstverständlich sind jedoch auch andere Arten von Anordnungen denkbar. Auf die genaue Ausgestaltung der elektrischen Schnittstellen 74 wird im Folgenden noch detaillierter eingegangen.

Des Weiteren ist erfindungsgemäß in dem Außenbereich 68 mindestens eine weitere optische Schnittstelle bzw. Schnittstelleneinrichtung 76' angeordnet. Zunächst dient der freie Zentralbereich 66 als optische Schnittstelle bzw. Schnittstelleneinrichtung 76. Die darüber hinaus in dem Außenbereich 68 vorgesehenen weiteren optischen Schnittstellen 76 können beispielsweise durch Lichtwellenleiter bereitgestellt werden, wie im Folgenden noch detaillierter ausgeführt werden wird.

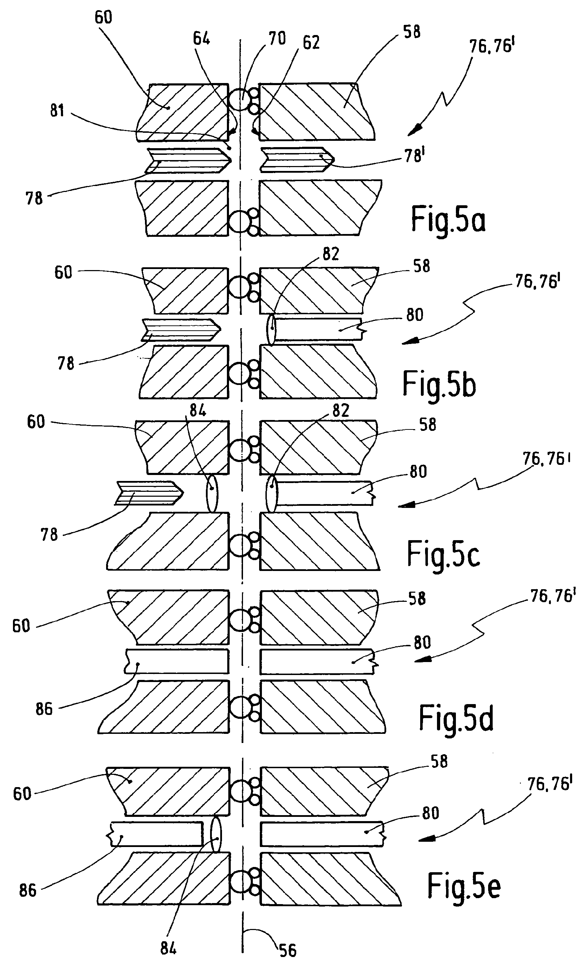

In Fig. 5a und 5b sind verschiedene Ausführungsformen möglicher optischer Schnittstellen 76 bzw. 76' dargestellt. Die dargestellten Ausführungsformen können sowohl für die optische Schnittstelle 76 in dem Zentralbereich 66 als auch für eine der weiteren optischen Schnittstellen 76' in dem Außenbereich 68 Anwendung finden.

In Fig. 5a ist die optische Schnittstelle 76, 76' durch zwei Öffnungen in sowohl der ersten Systemkomponente 58 als auch der zweiten Systemkomponente 60 gebildet. Die Öffnungen sind in den Wechselflächen 62, 64 der Systemkomponenten 58, 60 vorgesehen. In der dargestellten Ansicht sind die Systemkomponenten 58, 60 miteinander verbunden und über das Dreipunktlager 70 gekoppelt. In den Fig. 5a bis 5e sind aus Gründen der Übersicht zwei Lagerelemente des Dreipunktlagers 70 dargestellt, die dargestellte Schnittansicht würde somit in der Mitte einen Knick um 60° aufweisen.

Über die in Fig. 5a dargestellte Ausführungsform der optischen Schnittstelle 76, 76' kann beispielsweise ein kollimiertes Freistrahlbündel 78 übertragen werden. Dies kann frei durch eine Öffnung 81 in der Wechselfläche 64 treten und tritt danach in die erste Systemkomponente 58 ein. Der sich dort fortsetzende kollimierte Freistrahl 78' kann somit weiterverwendet werden. Auf diesem Wege ist auch eine Übertragung in beiden Richtungen möglich, das heißt sowohl von der ersten Systemkomponente 58 zu der zweiten Systemkomponente 60 als auch von der zweiten Systemkomponente 60 zu der ersten Systemkomponente 58.

In Fig. 5b ist eine weitere Ausführungsform einer möglichen optischen Schnittstelle 76, 76' dargestellt. In dieser Ausführungsform weist die erste Systemkomponente 58 einen Lichtwellenleiter 80 zur Übertragung von Licht auf. An einer Eintrittsfläche des Lichtwellenleiters 80 ist ein optisches Koppelglied 82 angeordnet. Das optische Koppelglied 82 kann beispielsweise eine Linse sein, die eintreffendes Licht in den Lichtwellenleiter 80 bündelt. Auf der Seite der zweiten Systemkomponente 60 ist kein optisches Koppelglied in der in Fig. 5b dargestellten Ausführungsform vorgesehen. Auf diese Weise kann es jedoch bereits möglich sein, einen kollimierten Freistrahl 78, aber auch unkollimiertes Licht (nicht dargestellt) von der zweiten Systemkomponente 60 auf die erste Systemkomponente 58 relativ verlustarm mittels des Koppelglieds 82 zu übertragen.

In Fig. 5c ist eine weiterentwickelte Variante der in Fig. 5b dargestellten Ausführungsform gezeigt. In dieser Variante weist auch die zweite Systemkomponente 60 ein optisches Koppelglied 84 auf. Auf diese Weise ist es möglich, einen kollimierten Freistrahl 78, aber auch unkollimiertes Licht, über die beiden Koppelglieder 84, 82 verlustarm in den Lichtwellenleiter 80 zu übertragen.

In Fig. 5d ist eine weitere Ausführungsform einer optischen Schnittstelle 76, 76' dargestellt, die mit zwei Lichtwellenleitern 80, 86 arbeitet. Bei einem relativ geringen Spaltmaß zwischen der ersten Systemkomponente 58 und der zweiten Systemkomponente 60 kann eine derartige Übertragung zwischen zwei Lichtwellenleitern bereits ausreichend sein.

In Fig. 5e ist eine weiterentwickelte Ausführungsform der in Fig. 5d dargestellten Ausführungsform gezeigt. In diesem Fall weist die zweite Systemkomponente 60 ein optisches Koppelglied 84 auf. Mit diesem können die aus dem Lichtwellenleiter 86 austretenden Strahlen im Lichtwellenleiter 80 gebündelt werden. Auf diese Weise können Übertragungsverluste von der zweiten Systemkomponente 60 auf die erste Systemkomponente 58 minimiert werden.

Die voranstehend in den Fig. 5a bis 5e für die erste Systemkomponente 58 und die zweite Systemkomponente 60 beschriebenen Anordnungen können selbstverständlich auch in umgekehrter Anordnung vorgesehen sein. Das heißt, die in den Darstellungen in der ersten Systemkomponente 58 dargestellten Elemente können auch in der zweiten Systemkomponente 60 und umgekehrt angeordnet sein, so dass sich ein spiegelbildlicher Aufbau ergibt. Grundsätzlich sind als optische Koppelglieder 82, 84 alle Arten von optischen Elementen möglich. Die optischen Koppelglied 82, 84 können als Linsen, typischerweise als Sammellinsen, ausgeführt sein. Dabei sind bikonvexe Ausführungen genauso wie plan-konvexe Ausführungen, aber auch konkav-konvexe Oberflächengestaltungen möglich, um eine Sammellinse zu erzeugen. Ein ähnlicher lichtsammelnder Effekt kann selbstverständlich auch mittels eines diffraktiven optischen Elements (DOE) erzeugt werden, beispielsweise mittels eines Hologramms oder eines computergenerierten Hologramms (CGH). Selbstverständlich kann ein gewünschter optischer Effekt auch mit einer sogenannten "graded index lens" (GRIN) erzeugt werden. Das Brechzahlprofil über den Durchmesser kann dabei einen Verlauf mit Stufen, aber auch einen stetigen Verlauf aufweisen.

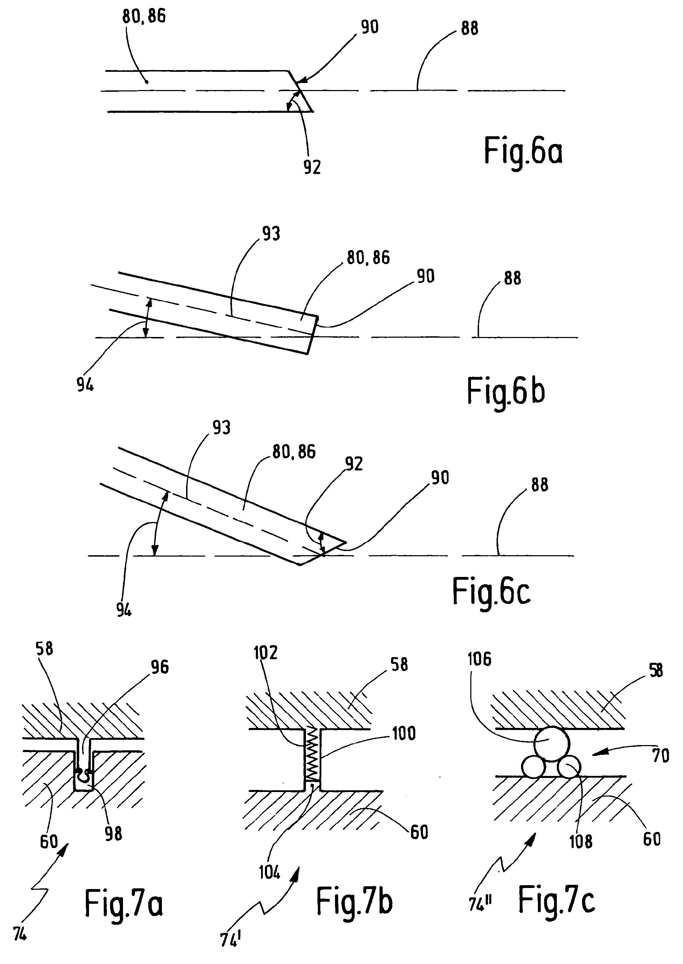

Darüber hinaus kann es vorteilhaft sein, im Falle von Lichtwellenleitern 80, 86 die Faserenden schräg zu einer optischen Übertragungsachse auszurichten. Ausführungsformen hierzu sind in den Fig. 6a bis 6c dargestellt.

In Fig. 6a ist eine optische Übertragungsachse mit dem Bezugszeichen 88 bezeichnet. Entsprechend kann vorgesehen sein, eine Austrittsfläche bzw. Stirnfläche eines Lichtwellenleiters 80, 86 unter einem Winkel 92 zu der optischen Übertragungsachse 88 auszurichten. Auf diese Weise ist es in der Regel möglich, Störungen aufgrund von Reflexionen zu minimieren.

In Fig. 6b ist eine alternative Ausführungsform dargestellt. In dieser ist eine Längsachse 93 einschließlich des Lichtwellenleiters 80, 86 unter einem Winkel 94 zu der optischen Übertragungsachse 88 ausgerichtet.

In Fig. 6c ist letztlich eine Kombination der in den Fig. 6a und 6b vorgeschlagenen Lösungen dargestellt. Die optische Achse 93 des Lichtwellenleiters 80, 86 ist geneigt zu der optischen Übertragungsachse um einen Winkel 94 ausgeführt, darüber hinaus ist auch die Stirnfläche 90 zusätzlich zu der optischen Achse 93 des Lichtwellenleiters 80, 86 geneigt. Selbstverständlich sind die Winkel 92 und 94 derart zu wählen, dass die Stirnfläche 90 nicht wieder senkrecht zu der optischen Übertragungsachse 88 verläuft.

Für die Winkel 92, 94 werden in der Regel wenige Grad gewählt, beispielsweise 1° bis 5°.

In Fig. 7a bis 7c sind verschiedene Ausführungsformen zur Bereitstellung einer elektrischen Schnittstelle bzw. Schnittstelleneinrichtung 74 dargestellt.

In Fig. 7a ist eine Stecker-Buchse-Verbindung dargestellt. Die Verbindung zwischen der ersten Systemkomponente 58 und der zweiten Systemkomponente 60 wird dabei mittels eines Steckers 96 und einer Buchse 98 bereitgestellt. In der dargestellten Ausführungsform ist der Stecker 96 in der ersten Systemkomponente 58 angeordnet und die Buchse 98 in der zweiten Systemkomponente 60 angeordnet. Selbstverständlich kann dies auch umgekehrt der Fall sein. In der Regel ist darüber hinaus vorgesehen, dass entweder der Stecker 96 oder die Buchse 98 schwimmend gelagert ist, um ein automatisches Finden des Steckers 96 und der Buchse 98 zu erleichtern und Verspannungen in der Stecker-Buchse-Verbindung zu vermeiden.

In Fig. 7b weist die erste Systemkomponente 58 einen mittels einer Feder 102 vorgespannten Kontaktstift 100 auf. Dieser wird über die Federvorspannung an eine Anschlagfläche 104 der zweiten Systemkomponente 60 gedrückt. Auf diese Weise kann ebenfalls eine elektrische Schnittstelle 74 bereitgestellt werden.

Letztlich ist in Fig. 7c dargestellt, dass auch ein erstes Lagerteil 106 und ein zweites Lagerteil 108 in der Dreipunktlagerung 70 eine elektrische Schnittstelle zwischen der ersten Schnittstelle 58 und der zweiten Systemkomponente 60 bereitstellen können.

Die Sicherheit der Kontakte bzw. des elektrischen Übertragungswegs zwischen der ersten Systemkomponente 58 und der zweiten Systemkomponente 60 nimmt von der in Fig. 7a dargestellten Ausführungsform zu der in Fig. 7c dargestellten Ausführungsform ab. Andererseits ist in der in Fig. 7c dargestellten Ausführungsform keinerlei mechanische Rückwirkung auf die relative Positionierung der ersten Systemkomponente 58 zu der zweiten Systemkomponente 60 vorhanden, da lediglich das ohnehin vorhandene Dreipunktlager 70 verwendet wird. Je nach Anwendungsfall kann daher eine der in den Fig. 7a bis 7c dargestellten Ausführungsformen vorteilhaft sein. Des Weiteren können die Lagerteile 106, 108 gegenüber der jeweiligen Systemkomponente 58, 60 elektrisch isoliert ausgestaltet sein, um so einen elektrischen Kurzschluss zwischen benachbarten Lagern des Dreipunktlagers 70 zu vermeiden. Alternativ können auch die Systemkomponenten 58, 60, insbesondere zwischen den Lagern eines Dreipunktlagers 70, aus einem elektrisch nicht leitfähigen Material ausgebildet sein. So können die Lagerteile 106, 108 mittels eines elektrischen Leiters, z.B. einem Kabel, einem Draht, oder einem leitfähigen Klebstoff, kontaktiert und an eine elektrische Schaltung angeschlossen werden.

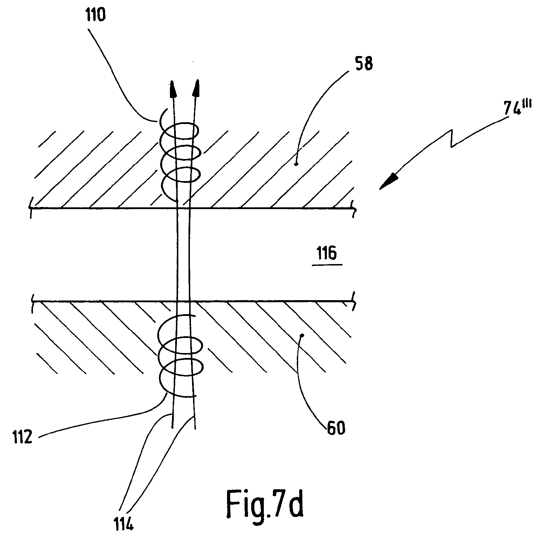

Letztlich ist in Fig. 7d eine weitere Ausführungsform einer elektrischen Schnittstelle 74 dargestellt. In dieser wird eine elektrische Schnittstelle 74 zwischen der ersten Systemkomponente 58 und der zweiten Systemkomponente 60 über einen zwischen diesen befindlichen Spalt 116 kontaktlos bereitgestellt. Insbesondere eignet sich hierzu das Prinzip der Gegeninduktion bzw. die Verwendung induktiver Resonanzübertrager. Dieses kann sowohl für eine elektrische Energieübertragung als auch für eine Übertragung von elektrischen Signalen Verwendung finden. Der Aufbau ist in der Fig. 7d lediglich schematisch dargestellt. In der Regel ist dazu sowohl in der ersten Systemkomponente 58 als auch in der zweiten Systemkomponente 60 jeweils eine Spule 110, 112 angeordnet. Durch Beaufschlagung einer der Spulen, beispielsweise der Spule 110, wird ein Magnetfeld erzeugt, das schematisch durch Feldlinien 114 in einer Skizze angedeutet ist. Die Feldlinien führen auch durch die jeweils andere Spule, beispielsweise die Spule 112, und durch das Induktionsprinzip fließt nun in der Spule 112 erneut ein Strom. Aufgrund des geringen Maßes des Spalts 116 kann auf diese Weise auch kontaktlos eine elektrische Schnittstelle 74 zwischen der ersten Systemkomponente 58 und der zweiten Systemkomponente 60 bereitgestellt werden.

Als besonders vorteilhaft wird dabei eine Kombination aus einer derartigen kontaktlosen Übertragung für elektrische Energie und einer Verwendung optischer Schnittstellen zur Übertragung von Daten bzw. Datensignalen zwischen der ersten Systemkomponente 58 und der zweiten Systemkomponente 60 angesehen. Insbesondere hat eine derartige Variante den Vorteil, dass die Signale galvanisch entkoppelt sind.

Für alle vorgeschlagenen Systeme zur Übertragung elektrischer Energie kommt darüber hinaus in Betracht, dass sie zusammen mit Systemen arbeiten, die unter der Bezeichnung "Energie-Harvesting" bekannt sind. Diese Systeme können auch kleinste Energiemengen wandeln und nutzbar machen. Einige Beispiele sind die Nutzung elektromagnetischer Strahlung, etwa mittels passiver RFIDs, oder die Photovoltaik.

## Patentansprüche

1. Systemkomponente (58; 28, 42, 44, 46, 48) für ein Koordinatenmessgerät (10) zum Ermitteln von dreidimensionalen Koordinaten eines zu vermessenden Objekts (40), wobei die Systemkomponente (58; 28, 42, 44, 46, 48) eine erste Wechselfläche (62) aufweist, die dazu ausgebildet ist, mit einer zweiten Wechselfläche (64) einer zweiten Systemkomponente (60; 28, 42, 44, 46, 48) eine Schnittstellenanordnung (56) zu bilden, über die die Systemkomponente (58; 28, 42, 44, 46, 48) und die zweite Systemkomponente (60; 28, 42, 44, 46, 48) miteinander gekoppelt sind, wobei die erste Wechselfläche (62) einen Zentralbereich (66) und einen den Zentralbereich (66) umgebenden Außenbereich (68) aufweist, wobei der Zentralbereich (66) eine optische Schnittstelleneinrichtung (76) aufweist, wobei der Außenbereich (68) Lagerelemente (106, 108) eines Dreipunktlagers (70) zur eindeutigen Positionierung der Systemkomponente (58; 28, 42, 44, 46, 48) und der zweiten Systemkomponente (60; 28, 42, 44, 46, 48) relativ zueinander aufweist, und wobei der Außenbereich (68) mindestens ein Halteelement (71) einer Halteeinrichtung (72) zum Aneinanderhalten der ersten Systemkomponente (58; 28, 42, 44, 46, 48) und der zweiten Systemkomponente (60; 28, 42, 44, 46, 48) aufweist, und wobei der Außenbereich (68) mindestens eine elektrische Schnittstelleneinrichtung (74) aufweist, **dadurch gekennzeichnet, dass** des Weiteren in dem Außenbereich (68) mindestens eine weitere optische Schnittstelleneinrichtung (76') zwischen der Systemkomponente (58; 28, 42, 44, 46, 48) und der zweiten Systemkomponente (60; 28, 42, 44, 46, 48) ausgebildet ist, und wobei die mindestens eine weitere optische Schnittstelleneinrichtung (76') in dem Außenbereich (68) für eine Datenübertragung ausgebildet ist.

2. Systemkomponente nach Anspruch 1, **dadurch gekennzeichnet, dass** das Halteelement (71) ein Halteelement einer magnetischen oder elektromagnetischen Halteeinrichtung (72) ist.

3. Systemkomponente nach Anspruch 1 oder 2, **dadurch gekennzeichnet, dass** die mindestens eine elektrische Schnittstelleneinrichtung (74) in dem Außenbereich (68) dazu ausgebildet ist, eine entsprechende Gegeneinrichtung (96, 98; 100, 104; 106, 108) der zweiten Systemkomponente (60; 28, 42, 44, 46, 48) zu kontaktieren.

4. Systemkomponente nach Anspruch 1 oder 2, **dadurch gekennzeichnet, dass** die mindestens eine elektrische Schnittstelleneinrichtung (74) in dem Außenbereich (68) dazu ausgebildet ist, elektrische Energie und/oder ein elektrisches Signal in Kommunikation mit einer Gegeneinrichtung (110, 112) der zweiten Systemkomponente (60; 28, 42, 44, 46, 48) kontaktlos zu übermitteln oder zu empfangen.

5. Koordinatenmessgerät (10) zum Ermitteln von dreidimensionalen Koordinaten eines zu vermessenden Objekts (40), mit einer ersten Systemkomponente (58; 28, 42, 44, 46, 48) nach einem der Ansprüche 1 bis 4 und einer zweiten Systemkomponente (60; 28, 42, 44, 46, 48), wobei die erste Systemkomponente (58; 28, 42, 44, 46, 48) eine erste Wechselfläche (62) aufweist und die zweite Systemkomponente (60; 28, 42, 44, 46, 48) eine zweite Wechselfläche (64) aufweist, wobei die erste Wechselfläche (62) und die zweite Wechselfläche (64) eine Schnittstellenanordnung (56) bilden, über die die erste Systemkomponente (58; 28, 42, 44, 46, 48) und die zweite Systemkomponente (60; 28, 42, 44, 46, 48) miteinander gekoppelt sind, wobei die Schnittstellenanordnung (56) einen Zentralbereich (66) und einen den Zentralbereich (66) umgebenden Außenbereich (68) aufweist, wobei über den Zentralbereich (66) eine optische Schnittstelle (76) zwischen der ersten Systemkomponente (58; 28, 42, 44, 46, 48) und der zweiten Systemkomponente (60; 28, 42, 44, 46, 48) gebildet ist, wobei der Außenbereich (68) ein Dreipunktlager (70) zur eindeutigen Positionierung der ersten Systemkomponente (58; 28, 42, 44, 46, 48) und der zweiten Systemkomponente (60; 28, 42, 44, 46, 48) relativ zueinander aufweist, wobei der Außenbereich (68) mindestens eine Halteeinrichtung zum Aneinanderhalten der ersten Systemkomponente (58; 28, 42, 44, 46, 48) und der zweiten Systemkomponente (60; 28, 42, 44, 46, 48) aufweist, und wobei der Außenbereich (68) mindestens eine elektrische Schnittstelle (74) aufweist, und wobei des Weiteren in dem Außenbereich (68) mindestens eine weitere optische Schnittstelle (76') zwischen der Systemkomponente (58; 28, 42, 44, 46, 48) und der zweiten Systeznkornponente (60; 28, 42, 44, 46, 48) ausgebildet ist, und wobei die mindestens eine weitere optische Schnittstelle (76') für eine optische Datenübertragung zwischen der ersten Systemkomponente (58; 28, 42, 44, 46, 48) und der zweiten Systemkomponente (60; 28, 42, 44, 46, 48) ausgebildet ist.

6. Koordinatenmessgerät nach Anspruch 5, **dadurch gekennzeichnet, dass** die optische Schnittstelle (76) in dem Zentralbereich (66) und/oder die mindestens eine weitere optische Schnittstelle (76') in dem Außenbereich (68) sowohl in der ersten Wechselfläche (62) als auch in der zweiten Wechselfläche (64) als Freistrahloptik zur Übertragung eines kollimierten Freistrahls (78) ausgebildet ist.

7. Koordinatenmessgerät nach Anspruch 5 oder 6, **dadurch gekennzeichnet, dass** die die optische Schnittstelle (76) in dem Zentralbereich (66) und/oder die mindestens eine weitere optische Schnittstelle (76') in dem Außenbereich (68) in entweder der ersten Wechselfläche (62) oder der zweiten Wechselfläche (64) als Freistrahloptik zur Übertragung eines kollimierten Freistrahls ausgebildet ist und in der jeweils anderen Wechselfläche einen Lichtwellenleiter (80, 86) zur optischen Übertragung aufweist.

8. Koordinatenmessgerät nach einem der Ansprüche 5 bis 7, **dadurch gekennzeichnet, dass** die optische Schnittstelle (76) in dem Zentralbereich (66) und/oder die mindestens eine weitere optische Schnittstelle (76') in dem Außenbereich (68) sowohl in der ersten Wechselfläche (62) als auch in der zweiten Wechselfläche (64) einen Lichtwellenleiter (80, 86) zur optischen Übertragung aufweist.

9. Koordinatenmessgerät nach einem der Ansprüche 5 bis 8, **dadurch gekennzeichnet, dass** in der ersten (62) und/oder der zweiten Wechselfläche (64) ein optisches Koppelglied (82, 84) angeordnet ist.

10. Koordinatenmessgerät nach einem der Ansprüche 5 bis 9, **dadurch gekennzeichnet, dass** die mindestens eine elektrische Schnittstelle (74) in dem Außenbereich (68) als Stecker-Buchse-Verbindung (96, 98) ausgebildet ist.

11. Koordinatenmessgerät nach einem der Ansprüche 5 bis 9, **dadurch gekennzeichnet, dass** die mindestens eine elektrische Schnittstelle (74) in dem Außenbereich (68) mittels eines federgespannten Kontaktstifts (100) und einer Kontaktfläche (104) bereitgestellt ist.

12. Koordinatenmessgerät nach einem der Ansprüche 5 bis 9, **dadurch gekennzeichnet, dass** die mindestens eine elektrische Schnittstelle (74) in dem Außenbereich (68) mittels des Dreipunktlagers (70) bereitgestellt ist.

13. Koordinatenmessgerät nach einem der Ansprüche 5 bis 9, **dadurch gekennzeichnet, dass** die mindestens eine elektrische Schnittstelle (74) in dem Außenbereich (68) als elektromagnetische Schnittstelle dazu ausgebildet ist, kontaktlos elektrische Energie zwischen der ersten Systemkomponente (58; 28, 42, 44, 46, 48) und der zweiten Systemkomponente (60; 28, 42, 44, 46, 48) zu übertragen.

## Claims

1. System component (58; 28, 42, 44, 46, 48) for a coordinate measuring machine (10) for establishing three-dimensional coordinates of an object (40) to be measured, wherein the system component (58; 28, 42, 44, 46, 48) has a first interchange area (62) embodied to form an interface arrangement (56) with a second interchange area (64) of a second system component (60; 28, 42, 44, 46, 48), by means of which interface arrangement the system component (58; 28, 42, 44, 46, 48) and the second system component (60; 28, 42, 44, 46, 48) are coupled to one another, wherein the first interchange area (62) has a central region (66) and an outer region (68) surrounding the central region (66), wherein the central region (66) has an optical interface device (76), wherein the outer region (68) has bearing elements (106, 108) of a three-point bearing (70) for unique positioning of the system component (58; 28, 42, 44, 46, 48) and the second system component (60; 28, 42, 44, 46, 48) relative to one another, and wherein the outer region (68) has at least one holding element (71) of a holding device (72) for holding the first system component (58; 28, 42, 44, 46, 48) against the second system component (60; 28, 42, 44, 46, 48), and wherein the outer region (68) has at least one electrical interface device (74), **characterized in that**, moreover, at least one further optical interface device (76') is formed between the system component (58; 28, 42, 44, 46, 48) and the second system component (60; 28, 42, 44, 46, 48) in the outer region (68) and wherein the at least one further optical interface device (76') in the outer region (68) is embodied for data transmission.

2. System component according to Claim 1, **characterized in that** the holding element (71) is a holding element of a magnetic or electromagnetic holding device (72).

3. System component according to Claim 1 or 2, **characterized in that** the at least one electrical interface device (74) in the outer region (68) is embodied to contact a corresponding counter device (96, 98; 100, 104; 106, 108) of the second system component (60; 28, 42, 44, 46, 48).

4. System component according to Claim 1 or 2, **characterized in that** the at least one electrical interface device (74) in the outer region (68) is embodied to wirelessly transmit or receive electrical energy and/or an electrical signal in communication with a counter device (110, 112) of the second system component (60; 28, 42, 44, 46, 48).

5. Coordinate measuring machine (10) for establishing three-dimensional coordinates of an object (40) to be measured, with a first system component (58; 28, 42, 44, 46, 48) according to one of Claims 1 to 4 and a second system component (60; 28, 42, 44, 46, 48), wherein the first system component (58; 28, 42, 44, 46, 48) has a first interchange area (62) and the second system component (60; 28, 42, 44, 46, 48) has a second interchange area (64), wherein the first interchange area (62) and the second interchange area (64) form an interface arrangement (56), by means of which interface arrangement the first system component (58; 28, 42, 44, 46, 48) and the second system component (60; 28, 42, 44, 46, 48) are coupled to one another, wherein the interface arrangement (56) is a central region (66) and an outer region (68) surrounding the central region (66), wherein an optical interface (76) between the first system component (58; 28, 42, 44, 46, 48) and the second system component (60; 28, 42, 44, 46, 48) is formed by way of the central region (66), wherein the outer region (68) has a three-point bearing (70) for unique positioning of the first system component (58; 28, 42, 44, 46, 48) and the second system component (60; 28, 42, 44, 46, 48) relative to one another, wherein the outer region (68) has at least one holding device for holding the first system component (58; 28, 42, 44, 46, 48) against the second system component (60; 28, 42, 44, 46, 48) and wherein the outer region (68) has at least one electrical interface (74) and, wherein, moreover, at least one further optical interface (76') is formed between the system component (58; 28, 42, 44, 46, 48) and the second system component (60; 28, 42, 44, 46, 48) in the outer region (68) and wherein the at least one further optical interface (76') is embodied between the first system component (58; 28, 42, 44, 46, 48) and the second system component (60; 28, 42, 44, 46, 48) for optical data transmission.

6. Coordinate measuring machine according to Claim 5, or **characterized in that** the optical interface (76) in the central region (66) and/or the at least one further optical interface (76') in the outer region (68) is/are embodied, both in the first interchange area (62) and in the second interchange area (64), as free-beam optics for transmitting a collimated free beam (78).

7. Coordinate measuring machine according to Claim 5 or 6, **characterized in that** the optical interface (76) in the central region (66) and/or the at least one further optical interface (76') in the outer region (68) is/are embodied, either in the first interchange area (62) or in the second interchange area (64), as free-beam optics for transmitting a collimated free beam and in the respective other interchange area has an optical waveguide (80, 86) for optical transmission.

8. Coordinate measuring machine according to one of Claims 5 to 7, **characterized in that** the optical interface (76) in the central region (66) and/or the at least one further optical interface (76') in the outer region (68) has an optical waveguide (80, 86) for optical transmission both in the first interchange area (62) and in the second interchange area (64).

9. Coordinate measuring machine according to one of Claims 5 to 8, **characterized in that** an optical coupling member (82, 84) is arranged in the first (62) and/or the second interchange area (64).

10. Coordinate measuring machine according to one of Claims 5 to 9, **characterized in that** the at least one electrical interface (74) in the outer region (68) is embodied as a plug-and-socket connection (96, 98).

11. Coordinate measuring machine according to one of Claims 5 to 9, **characterized in that** the at least one electrical interface (74) in the outer region (68) is provided by means of a spring-loaded contact pin (100) and a contact area (104).

12. Coordinate measuring machine according to one of Claims 5 to 9, **characterized in that** the at least one electrical interface (74) in the outer region (68) is provided by means of the three-point bearing (70).

13. Coordinate measuring machine according to one of Claims 5 to 9, **characterized in that** the at least one electrical interface (74) in the outer region (68), as an electromagnetic interface, is embodied to transmit electrical energy wirelessly between the first system component (58; 28, 42, 44, 46, 48) and the second system component (60; 28, 42, 44, 46, 48).

## Revendications

1. Composant système (58 ; 28, 42, 44, 46, 48) pour un appareil de mesure de coordonnées (10) destiné à déterminer des coordonnées tridimensionnelles d'un objet à mesurer (40), dans lequel le composant système (58 ; 28, 42, 44, 46, 48) comporte une première surface alternante (62), qui est configurée pour former avec une deuxième surface alternante (64) d'un deuxième composant système (60 ; 28, 42, 44, 46, 48) un ensemble d'interfaces (56), par l'intermédiaire duquel le composant système (58 ; 28, 42, 44, 46, 48) et le deuxième composant système (60 ; 28, 42, 44, 46, 48) sont couplés l'un à l'autre, dans lequel la première surface alternante (62) comporte une région centrale (66) et une région extérieure (68) entourant la région centrale (66), dans lequel la région centrale (66) comporte un dispositif d'interface optique (76), dans lequel la région centrale (68) comporte des éléments paliers (106, 108) d'un palier à trois points (70) pour le positionnement univoque du premier composant système (58 ; 28, 42, 44, 46, 48) et du deuxième composant système (60 ; 28, 42, 44, 46, 48) l'un par rapport à l'autre, et dans lequel la région extérieure (68) comporte au moins un élément de maintien (71) d'un dispositif de maintien (72) destiné à maintenir l'un contre l'autre le premier composant système (58 ; 28, 42, 44, 46, 48) et le deuxième composant système (60 ; 28, 42, 44, 46, 48), et dans lequel la région extérieure (68) comporte au moins un dispositif d'interface électrique (74), **caractérisé en ce qu'**au moins un autre dispositif d'interface optique (76') est en outre formé dans la région extérieure (68) entre le composant système (58 ; 28, 42, 44, 46, 48) et le deuxième composant système (60 ; 28, 42, 44, 46, 48), et dans lequel l'au moins un autre dispositif d'interface optique (76') est formé dans la région extérieure (68) pour la transmission de données.

2. Composant système selon la revendication 1, **caractérisé en ce que** l'élément de maintien (71) est un élément de maintien d'un dispositif de maintien (72) magnétique ou électromagnétique.

3. Composant système selon la revendication 1 ou 2, **caractérisé en ce que** l'au moins un dispositif d'interface électrique (74) est formé dans la région extérieure (68) pour venir au contact d'un dispositif antagoniste (96, 98 ; 100, 104 ; 106, 108) correspondant du deuxième composant système (60 ; 28, 42, 44, 46, 48).

4. Composant système selon la revendication 1 ou 2, **caractérisé en ce que** l'au moins un dispositif d'interface électrique (74) est formé dans la région extérieure (68) pour transmettre ou recevoir sans contact de l'énergie électrique et/ou un signal électrique en communication avec un dispositif antagoniste (110, 112) du deuxième composant système (60 ; 28, 42, 44, 46, 48).

5. Appareil de mesure de coordonnées (10) destiné à déterminer des coordonnées tridimensionnelles d'un objet à mesurer (40), équipé d'un premier composant système (58 ; 28, 42, 44, 46, 48) selon l'une quelconque des revendications 1 à 4 et d'un deuxième composant système (60 ; 28, 42, 44, 46, 48), dans lequel le premier composant système (58 ; 28, 42, 44, 46, 48) comporte une première surface alternante (62) et le deuxième composant système (60 ; 28, 42, 44, 46, 48) comporte une deuxième surface alternante (64), dans lequel la première surface alternante (62) et la deuxième surface alternante (64) forment un ensemble d'interfaces (56) par l'intermédiaire duquel le premier composant système (58 ; 28, 42, 44, 46, 48) et le deuxième composant système (60 ; 28, 42, 44, 46, 48) sont couplés l'un à l'autre, dans lequel l'ensemble d'interfaces (56) comporte une région centrale (66) et une région extérieure (68) entourant la région centrale (66), dans lequel une interface optique (76) est formée par l'intermédiaire de la région centrale (66) entre le premier composant système (58 ; 28, 42, 44, 46, 48) et le deuxième composant système (60 ; 28, 42, 44, 46, 48), dans lequel la région extérieure (68) comporte un palier à trois points (70) pour le positionnement univoque du premier composant système (58 ; 28, 42, 44, 46, 48) et du deuxième composant système (60 ; 28, 42, 44, 46, 48) l'un par rapport à l'autre, dans lequel la région extérieure (68) comporte au moins un dispositif de maintien destiné à maintenir l'un contre l'autre le premier composant système (58 ; 28, 42, 44, 46, 48) et le deuxième composant système (60 ; 28, 42, 44, 46, 48), et dans lequel la région extérieure (68) comporte au moins une interface électrique (74), et dans lequel au moins une autre interface optique (76') est en outre formée dans la région extérieure (68) entre le composant système (58 ; 28, 42, 44, 46, 48) et le deuxième composant système (60 ; 28, 42, 44, 46, 48), et dans lequel l'au moins une autre interface optique (76') est formée pour la transmission optique de données entre le premier composant système (58 ; 28, 42, 44, 46, 48) et le deuxième composant système (60 ; 28, 42, 44, 46, 48).

6. Appareil de mesure de coordonnées selon la revendication 5, **caractérisé en ce que** l'interface optique (76) est formée dans la région centrale (66) et/ou **en ce que** l'au moins une autre interface optique (76') est formée dans la région extérieure (68) à la fois dans la première surface alternante (62) et dans la deuxième surface alternante (64) en tant qu'optique à rayonnement libre destinée à transmettre un faisceau libre (78) collimaté.

7. Appareil de mesure de coordonnées selon la revendication 5 ou 6, **caractérisé en ce que** l'interface optique (76) dans la région centrale (66), et/ou l'au moins une autre interface optique (76') formée, dans la région extérieure (68), est formée soit dans la première surface alternante (62) soit dans la deuxième surface alternante (64), sous la forme d'une optique à faisceau libre destinée à transmettre un faisceau libre collimaté et comporte, dans l'autre surface alternante respective, un guide d'ondes optique (80, 86) destiné à effectuer une transmission optique.

8. Appareil de mesure de coordonnées selon l'une quelconque des revendications 5 à 7, **caractérisé en ce que** l'interface optique (76), dans la région centrale (66), et/ou l'au moins une autre interface optique (76'), dans la région extérieure (68), comporte à la fois dans la première surface alternante (62) et dans la deuxième surface alternante (64), un guide d'ondes optique (80, 86) destiné à effectuer une transmission optique.

9. Appareil de mesure de coordonnées selon l'une quelconque des revendications 5 à 8, **caractérisé en ce qu'**un élément de couplage optique (82, 84) est disposé dans la première (62) et/ou la deuxième surface alternante (64).

10. Appareil de mesure de coordonnées selon l'une quelconque des revendications 5 à 9, **caractérisé en ce que** l'au moins une interface électrique (74) est formée dans la région extérieure (68) sous la forme d'une connexion (96, 98) entre connecteur et douille.

11. Appareil de mesure de coordonnées selon l'une quelconque des revendications 5 à 9, **caractérisé en ce que** l'au moins une interface électrique (74) est réalisée, dans la région extérieure (68), au moyen d'une broche de contact contrainte par ressort (100) et d'une surface de contact (104).

12. Appareil de mesure de coordonnées selon l'une quelconque des revendications 5 à 9, **caractérisé en ce que** l'au moins une interface électrique (74) est réalisée, dans la région extérieure (68), au moyen du palier à trois points (70).

13. Appareil de mesure de coordonnées selon l'une quelconque des revendications 5 à 9, **caractérisé en ce que** l'au moins une interface électrique (74) est formée, dans la région extérieure (68), sous la forme d'une interface électromagnétique, de manière à transmettre de l'énergie électrique sans contact entre le premier composant système (58 ; 28, 42, 44, 46, 48) et le deuxième composant système (60 ; 28, 42, 44, 46, 48).
